# EUROPÄISCHE PATENTSCHRIFT

(11) **EP 3 530 434 B1**
(45) Veröffentlichungstag und Bekanntmachung des Hinweises auf die Patenterteilung: **29.03.2023**
(21) Anmeldenummer: 19161980.8
(22) Anmeldetag: 17.07.2015
(51) Int. Cl.: B29C 63/44, F16L 47/22, B29C 61/06, B29C 65/00, F16L 43/00, B29L 23/00, B29D 23/00, B29C 65/66, B29K 105/02, B29C 65/10, B29C 65/20, B29C 65/42, B29C 63/42

(54) **VERFAHREN ZUR NACHUMHÜLLUNG EINES ROHRFORMTEILS**
METHOD FOR ADDITIONAL CLADDING OF A PIPE FORM PART
PROCÉDÉ D'ENROBAGE ULTÉRIEUR D'UNE PIÈCE TUBULAIRE

(30) Priorität: 11.08.2014 DE 102014111381
(43) Veröffentlichungstag der Anmeldung: 28.08.2019
(62) Teilanmeldung aus: 15177340.5
(73) Patentinhaber: egeplast international GmbH, 48268 Greven (DE)
(72) Erfinder: den Ouden, Dirk, 48282 Emsdetten (DE)
(74) Vertreter: Duda, Rafael Thomas

(56) Entgegenhaltungen:
- EP-A1- 0 046 027
- DE-A1- 3 211 796
- DE-A1- 3 627 911
- DE-U1- 20 210 474
- FR-A1- 2 332 116
- US-A- 3 455 336

## Beschreibung

Die vorliegende Erfindung betrifft ein Verfahren zur Nachumhüllung von Rohrformteilen, bei dem man das Rohrformteil mittels einer Schrumpfmuffe umhüllt, die bei Anwendung von Wärme schrumpft.

Grundsätzlich ist die Verwendung von Schrumpfschläuchen zur Umhüllung von Rohren aus dem Stand der Technik seit längerem bekannt. Beispielsweise beschreibt die DE 14 79 648 wärmeschrumpfbare mehrschichtige Überzüge aus rückstellfähigen Polymeren. Dies sind Materialien, insbesondere verformte thermoplastische Kunststoffe, die ein Formgedächtnis haben und sich bei Anwendung von Wärme in ihre ursprüngliche Form zurückkehren. Dieses Phänomen wird in der Schrift als Thermorückfederung und ansonsten auch als "Memoryeffekt" bezeichnet. Diese Eigenschaft ermöglicht die Herstellung von Schrumpfmuffen, mittels derer man in einem aufgeweiteten Zustand einen Rohrabschnitt umhüllen und die Muffe anschließend durch Anwendung von Wärme auf den Rohrabschnitt aufschrumpfen kann.

In der DE 31 01 256 A1 ist eine längsgeteilte Kabelmuffe aus einem thermoplastischen Kunststoff mit einem Formgedächtnis beschrieben, die durch Wärmezufuhr auf einen abzudichtenden Gegenstand aufschrumpfbar ist. Um die Längsnaht zu schließen wird hier eine Art Klettverschluss mit Verschlusselementen entlang der Längsränder des Muffenrohrs verwendet. Ein solcher Verschluss der Längsnaht ist jedoch nicht dauerhaft stabil und ausreichend dicht wie beispielsweise eine stoffschlüssige Schweißverbindung. Zudem wird das Muffenrohr so gerollt, dass sich im Bereich der Längsnaht eine Überlappung ergibt, wodurch ein unrundes Rohr entsteht. Für ein im Erdreich zu verlegendes Rohr für Versorgungsleitungen wie Gas, Wasser, Abwasser etc. ist eine solche geometrische Form nicht normengerecht und daher nicht akzeptabel.

Aus der DE 10 2007 038 257 A1 ist die Verwendung von Schrumpfmuffen im Bereich von Abzweigungen von Stahlrohrleitungen mit Kunststoffisolierung bekannt, wobei dort Schrumpfmuffen im Verbindungsbereich zweier Rohrleitungsabschnitte über die zu verbindenden Rohrleitungsabschnitte geschoben und danach zunächst eine Verschweißung der Rohrleitungsenden und anschließend ein Aufschrumpfen der Schrumpfmuffe im Verbindungsbereich erfolgt. Die Schrumpfmuffe muss dabei zunächst in eine von der Verbindungsstelle entfernte Position geschoben werden, damit sie durch die beim Schweißvorgang auftretende Wärme nicht vorzeitig schrumpft. Bei dieser bekannten Technik können zwar auch Formteile jeweils untereinander oder mit geraden Rohrleitungsabschnitten verbunden werden, wie beispielsweise T-Stücke oder gekrümmte Rohrleitungsabschnitte, aber diese müssen jeweils endseitig gerade Rohrstutzen aufweisen und die verwendete Schrumpfmuffe ist ringförmig ausgebildet und wird über die zu verbindenden geraden Rohrstutzen im Verbindungsbereich geschoben.

In der DE 10 2010 015 462 A1 ist ein Verfahren zum Verbinden von ummantelten Rohren unter Verwendung von Schrumpfmuffen bekannt. Bei diesem Verfahren werden jedoch Rohre miteinander verbunden, deren Mantel eine innere Schaumstoffschicht aufweist. Daher ist das Verfahren auch spezifisch für derartige Rohre mit Schaumstoffschichten ausgelegt, wobei ein Ringraum zwischen den Mantelenden der zu verbindenden Rohre ausgeschäumt wird. Außerdem wird eine Gaspermeationssperrfolie um den ausgeschäumten Ringraum gewickelt, die seitlich mit Hilfe von Dicht/Klebebändern abgedichtet werden muss. Durch die Gaspermeationssperrfolie wird verhindert, dass Sauerstoff aus der Atmosphäre mit der Schaumstoffschicht in Kontakt tritt.

In der US 3 455 336 A wird ein Y-förmig verzweigtes Rohr beschrieben, welches als Schutzrohr beispielsweise verwendet wird zur Umhüllung eines Kabelstrangs, wozu das Rohr in Längsrichtung geschlitzt ist und im Bereich des Längsschlitzes T-förmige Anformungen aufweist, die von einem C-förmigen Kanal-Material übergriffen werden. Es wird ein zuvor gedehntes und somit in der Form instabiles Material verwendet, welches bei anschließender Einwirkung von Wärme schrumpft, wodurch der Längsschlitz des Rohres durch das Kanal-Material geklammert wird. Auch das verzweigte Rohr wird mittels Wärme geschrumpft, um so den Kabelstrang eng zu umhüllen.

Die DE 36 27 911 A1 offenbart ein Verfahren, bei dem man ein Band aus einem bei Wärmezufuhr schrumpfbaren vernetzten Kunststoff um einen langgestreckten Gegenstand herumlegt und nach dem Verbinden der Bandkanten durch Wärmezufuhr auf den Gegenstand aufschrumpft.

Mehrschichtige Rohre, insbesondere mehrschichtige Kunststoffrohre, beispielsweise bestehend aus Kernrohren mit Schutzmantel und gegebenenfalls weiteren Zwischenschichten zwischen Kernrohr und Schutzmantel lassen sich maschinell fertigen, insbesondere durch Rohrextrusion, sofern es sich um geradlinige Rohrleitungsabschnitte handelt. Bei Formteilen und Fittingen mit nicht geradlinigen Abschnitten, wie beispielsweise Bögen, T-Stücken, Reduzierungen für mehrschichtige Rohrleitungen, können jedoch die Kernrohrabschnitte nicht maschinell nachumhüllt werden. Daher erfolgt hier nach dem Stand der Technik das Nachumhüllen beispielsweise durch Klebebänder, mittels derer Kernrohrabschnitte der Formteile nachumhüllt werden, um einen Schutzmantel zu bilden, d.h. eine äußere Schicht für den mechanischen Schutz des Kernrohrabschnitt des Formteils. Noch komplexer sind die Anforderungen bei Formteilen, bei denen Zwischenschichten vorhanden sind, beispielsweise eine elektrische Zwischenschicht, die zur Überwachung einer Rohrleitung dient, denn diese Zwischenschichten müssen absolut wasserdicht ausgeführt werden.

Bei Formteilen der vorgenannten Art, beispielsweise Rohrbögen, ist es auch nicht möglich, herkömmliche Schrumpfschläuche für die Nachumhüllung zu verwenden, da sich ein Schrumpfschlauch auf der Innenseite des Rohrbogens des Formteils stauchen würde.

Die Aufgabe der Erfindung besteht darin, ein Verfahren zur Nachumhüllung eines Rohrformteils mit den Merkmalen der eingangs genannten Gattung zu schaffen, welches rationeller ist als bekannte Verfahren und zu mechanisch belastbaren und beständigen Rohrformteilen führt.

Die Lösung dieser Aufgabe liefert ein Verfahren zur Nachumhüllung eines Rohrformteils der eingangs genannten Gattung mit den Merkmalen des Hauptanspruchs.

Erfindungsgemäß ist vorgesehen, dass man ein unter Druck und Wärme geweitetes Kunststoffrohrmaterial zunächst in axiale Segmentelemente aufschneidet, diese Segmentelemente auf ein Kernrohr des Rohrformteils aufschiebt, diese Segmentelemente in dem herzustellenden Rohrformteil entsprechenden Winkeln zu einer Segmentschrumpfmuffe wieder zusammenfügt, wobei man die Segmentelemente mittels eines Lochheizspiegels (Heizspiegels mit Loch) stumpf miteinander zu einer Segmentschrumpfmuffe verschweißt und dann die Segmentschrumpfmuffe unter Einbringung von Wärme schrumpft.

Das Erwärmen der Segmentschrumpfmuffe, um diese auf das Kernrohr des Formteils aufzuschrumpfen, kann zum Beispiel mittels einer Gasflamme oder mittels Heißluft erfolgen.

Die Segmente zur Herstellung der Segmentschrumpfmuffe können beispielsweise durch Stumpfschweißen in den für das herzustellende Formteil entsprechenden Winkeln zueinander miteinander verbunden werden. Vor diesem Schweißvorgang ist es vorteilhaft, die Segmentelemente in ihrer vorgesehenen Winkelposition zueinander mechanisch zu fixieren, beispielsweise mit Hilfe von Manschetten oder dergleichen. Man kann die Segmentelemente zum Beispiel auch durch heften aneinander fixieren.

Ein erfindungsgemäßes Rohrformteil kann beispielsweise ein T-Stück, ein Reduzierstück oder ein Rohrbogen sein. Wenn man eine Segmentschrumpfmuffe für einen Rohrbogen von beispielsweise insgesamt 90 ° aus mehreren Segmentelementen aufbaut, dann kann man zum Beispiel dazu ein erstes gerades Segmentelement verwenden, das an seinem einen äußeren Ende in Querrichtung geradlinig abgeschnitten ist, aber an seinem anderen (inneren) Ende schräg angeschnitten ist, beispielsweise in einem Winkel von etwa 22,5 ° zu seiner Querebene. Daran kann sich dann ein Segmentelement anschließen, das an seinen beiden Enden schräg angeschnitten ist, beispielsweise in einem Winkel von jeweils etwa 22,5 ° zur Querebene und das außenseitig bezogen auf den herzustellenden Rohrbogen um etwa 30 ° abgewinkelt ist zur Längsachse des ersten geraden Segmentelements. Daran kann sich dann ein drittes winkelförmiges Segmentelement anschließen, welches ebenso geformt ist wie das zweite Segmentelement, so dass das zweite und dritte Segmentelement jeweils in der Seitenansicht gesehen eine Trapezform haben und daran kann sich dann wiederum ein viertes gerades Segmentelement anschließen, das an seinem Ende, welches dem Rohrbogen zugewandt ist schräg angeschnitten ist, aber an seinem anderen äußeren Ende in Querrichtung geradlinig abgeschnitten ist und somit eine entsprechende Grundform hat wie das erste Segmentelement. Da zwischen dem ersten und dem zweiten Segmentelement außenseitig bezogen auf den Rohrbogen in einem Winkel von etwa 30 ° abgewinkelt wird, dann zwischen dem zweiten und dem dritten Segmentelement wiederum in einem Winkel von etwa 30 ° abgewinkelt wird und desgleichen zwischen dem dritten Segmentelement und dem vierten Segmentelement ebenfalls um etwa 30 ° abgewinkelt wird, ergibt sich insgesamt ein Rohrbogen von 90 °. Ein entsprechendes Beispiel eines solchen Rohrbogens wird nachfolgend noch in der Figurenbeschreibung unter Bezugnahme auf die Zeichnungen näher und anschaulicher erläutert.

Gemäß einer bevorzugten Weiterbildung der Erfindung können die Segmentelemente für die Herstellung der Segmentschrumpfmuffe beispielsweise aus einem vergleichsweise dünnwandigen Polyolefinmaterial, insbesondere aus einem Polyethylenmaterial bestehen.

Die Erfindung sieht vor, dass man ein unter Druck und Wärme geweitetes Kunststoffrohrmaterial zunächst in axiale Segmentelemente aufschneidet, diese Segmentelemente in dem herzustellenden Rohrformteil entsprechenden Winkeln zu einer Segmentschrumpfmuffe wieder zusammenfügt, wobei man die Segmentelemente mittels eines Lochheizspiegels stumpf miteinander zu einer Segmentschrumpfmuffe verschweißt und dann die Segmentschrumpfmuffe unter Einbringung von Wärme schrumpft. Durch die Verwendung eines speziellen Lochheizspiegels ist es in diesem Fall möglich, die Segmente der Schrumpfmuffe auf das Kernrohr des Formteils aufzuschieben und auf dem Kernrohr zu der Segmentschrumpfmuffe zu verschweißen, die danach aufgeschrumpft wird.

Gemäß einer bevorzugten Weiterbildung der vorliegenden Erfindung kann das Rohrformteil ein mindestens einschichtiges Kernrohr umfassen, welches zunächst mit einer vorzugsweise dünnen folienartigen metallischen Zwischenschicht umhüllt, vorzugsweise umwickelt wird und anschließend mittels einer Segmentschrumpfmuffe aus Kunststoff nachumhüllt wird, welche eine äußere Schutzschicht für das Rohrformteil bildet.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 ein Kernrohr eines Rohrformteils, welches nach dem erfindungsgemäßen Verfahren nachträglich umhüllt wird;

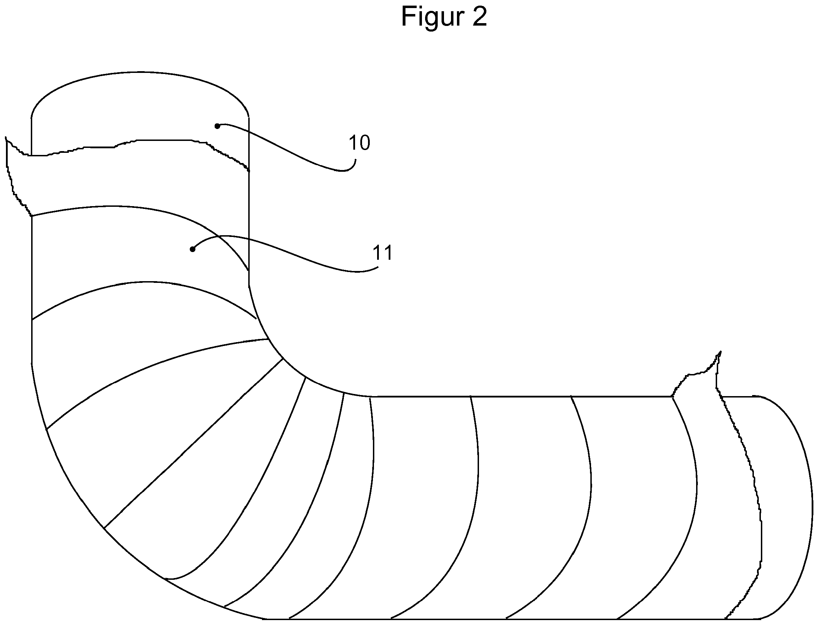

Figur 2 das Kernrohr des Rohrformteils von Figur 1, welches vor der Umhüllung mit einer Schrumpfmuffe zunächst mit einer metallischen Folie umwickelt wurde;
Figur 3 eine aus mehreren Rohrsegmenten hergestellte Segmentschrumpfmuffe in Form eines 90 ° Bogens, mittels derer das in Figur 2 dargestellte Kernrohr umhüllt wird;

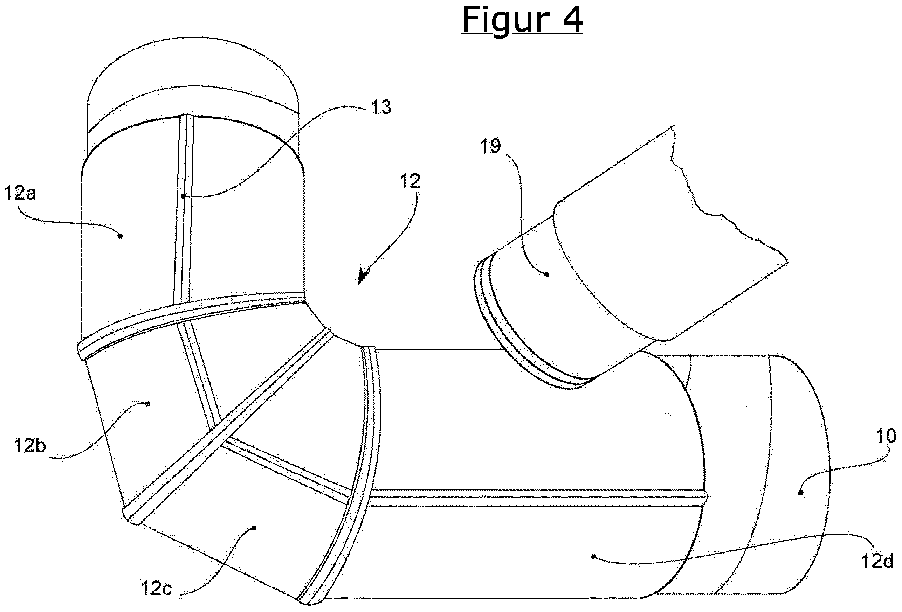

Figur 4 das fertige Rohrformteil nach dem Schrumpfvorgang;

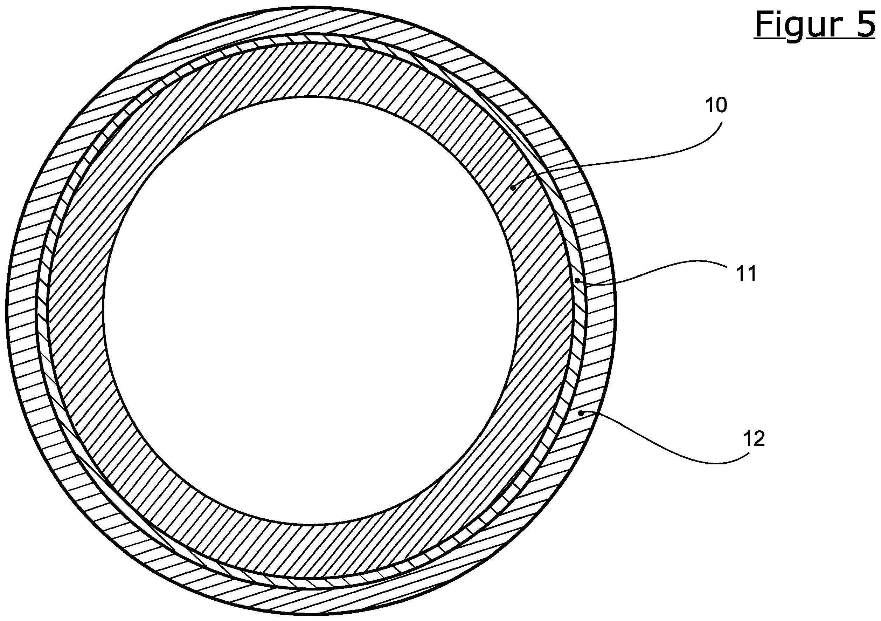

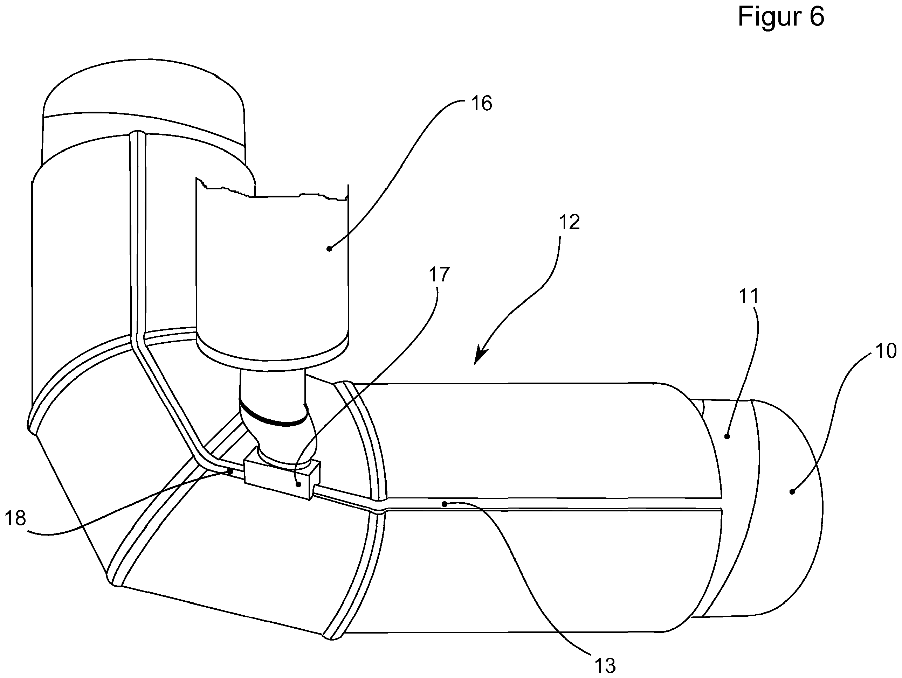

Figur 5 einen Querschnitt durch das fertige Rohrformteil von Figur 4.

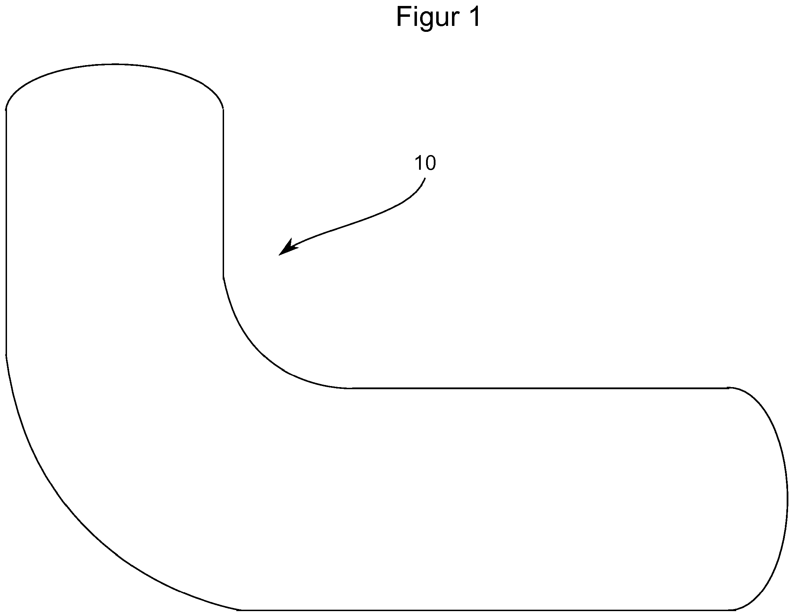

Zunächst wird auf Figur 1 Bezug genommen. Die Darstellung zeigt ein Kernrohr 10 eines Rohrformteils, von dem ausgegangen wird und welches nach dem erfindungsgemäßen Verfahren nachträglich umhüllt wird. Es handelt sich bei diesem Kernrohr um einen Rohrbogen von beispielsweise 90 °. Auf dieses Kernrohr, welches aus einem für den Transport flüssiger oder gasförmiger Medien geeigneten Innenrohr besteht, wird zunächst vor der Aufbringung der abschließenden Umhüllung eine Zwischenschicht 11 aus einer metallischen Folie gewickelt. Hierbei handelt es sich um eine elektrisch leitende Zwischenschicht, die bei der verlegten Rohrleitung beispielsweise dazu dient, Leckagen in der Rohrleitung zu überwachen. Aus diesem Grunde muss die durch Nachumhüllen danach aufzubringende äußere Schutzschicht absolut wasserdicht sein, da sonst ein Leck angezeigt und somit die gewünschte Überwachung nicht funktionieren würde.

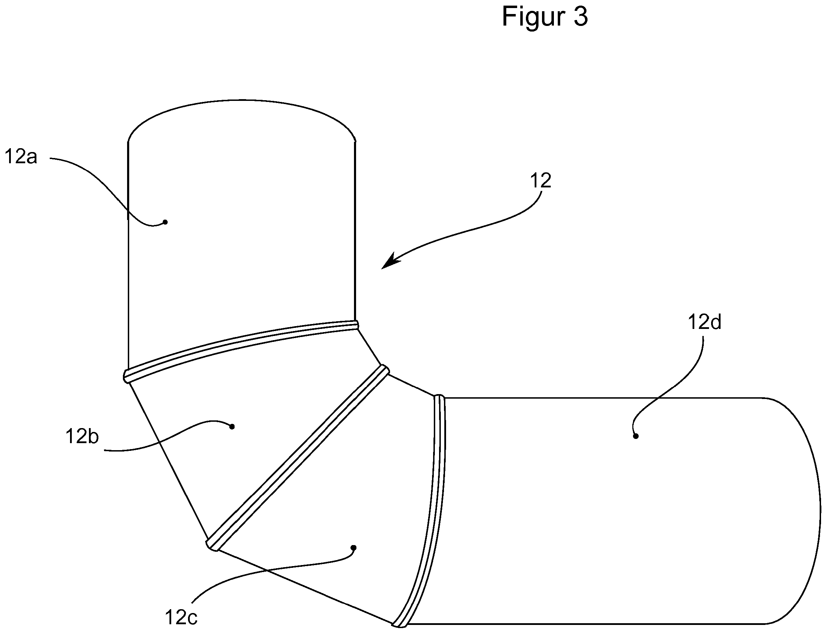

In Figur 3 ist nun die Segmentschrumpfmuffe 12 dargestellt, die wie man sieht aus insgesamt vier miteinander verschweißten Segmentelementen hergestellt wurde, um so einen 90 ° Bogen zu erhalten, der sich auf das Kernrohr 10 aufschrumpfen lässt. Natürlich sind zahlreiche andere Möglichkeiten denkbar, um einen solchen 90 °-Bogen aus mehreren Segmentelementen zusammen zu setzen. Im vorliegenden Fall wurden zwei jeweils endseitige weitgehend geradlinige Segmentelemente 12 a und 12 d verwendet, die an ihrem jeweils äußeren Ende jeweils gerade in Querrichtung abgeschnitten sind, jedoch an ihrem jeweils inneren Ende, der dem Bogen zugewandt ist, jeweils schräg angeschnitten sind. Hinzu kommen zwei jeweils kürzere in der Ansicht gemäß Figur 3 etwa trapezförmige Segmentelemente 12 b und 12 c, die jeweils an das innere Ende der beiden geradlinigen Segmentelemente 12 a bzw. 12 d angesetzt sind, wobei die beiden kürzeren Segmentelemente 12 b und 12 c im Wesentlichen den Bogenabschnitt der bogenförmigen Segmentschrumpfmuffe bilden. Betrachtet man die Außenseite des Bogenabschnitts, dann bildet der Außenradius des ersten trapezförmigen Segmentelements 12 b einen Winkel von etwa 30 ° mit dem geradlinigen Segmentelement 12 a. Das zweite trapezförmige Segmentelement 12 c bildet mit seinem Außenradius wiederum einen Winkel von etwa 30 ° mit dem ersten trapezförmigen Segmentelement 12 b. Letzteres bildet wiederum mit dem zweiten geradlinigen Segmentelement 12 d im Außenradius des Bogens einen Winkel von etwa 90 °, so dass sich in der Summe insgesamt ein 90 ° Bogen ergibt. Entsprechend setzen sich die Winkel im Bereich des Innenradius des Bogenabschnitts zusammen.

Betrachtet man hingegen die Querrichtung, dann bildet die gemeinsame Schweißkante des ersten geradlinigen Segmentelements 12 a und des ersten trapezförmigen Segmentelements 12 b einen Winkel von etwa 22,5 ° bezogen auf die Querebene bzw. das geradlinig abgeschnittene äußere Ende des ersten geradlinigen Segmentelements 12 a. Da das erste trapezförmige Segmentelement 12 b und das zweite trapezförmige Segmentelement 12 c jeweils an ihren beiden Enden in Querrichtung in einem Winkel von 22,5 ° angeschnitten sind und beide geradlinigen Segmentelemente 12 a und 12 d jeweils an ihren inneren dem Bogen zugewandten Enden ebenfalls jeweils um 22,5 ° angeschnitten sind, addieren sich diese vier Winkel ebenfalls zu 90 °, daher nehmen die beiden geradlinigen Abschnitte 12 a und 12 d einen Winkel von insgesamt 90 ° miteinander ein. Zwischen den beiden geradlinigen Segmentelementen 12 a und 12 d liegen die beiden trapezförmigen Segmentelemente 12 b und 12 c. Man sieht, dass auf diese Weise eine Segmentschrumpfmuffe gebildet wird, die sowohl im Bereich des Außenradius des Bogens als auch im Bereich des Innenradius des Bogens keinen durchgehend einheitlich gekrümmten Bogen bildet, sondern einen Bogen, der sich aus den jeweils in sich geradlinigen Segmentabschnitten der vier Segmentelemente 12 a, 12 b, 12 c, 12 d zusammensetzt. Eine solche aus Segmentelementen zusammengeschweißte Segmentschrumpfmuffe lässt sich auf ein bogenförmiges Kernrohr 10 aufschrumpfen, während dies bei einer Schrumpfmuffe mit durchgehendem Bogen (Krümmungsradius) nicht möglich ist.

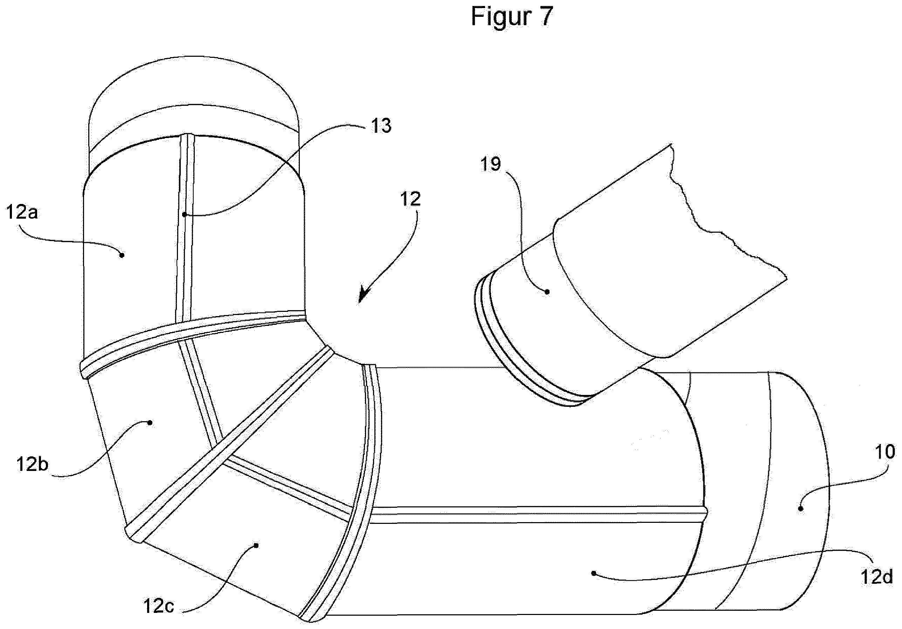

Die Segmentschrumpfmuffe 12 umschließt das Kernrohr 10 und die Zwischenschicht 11 in dem Bereich des Rohrbogens vollständig mit noch etwas Umfangsabstand. Die Segmentschrumpfmuffe 12 kann nun durch Aufbringen von Wärme beispielsweise mittels eines Heißluftgebläses 19 auf den Rohrbogen des Kernrohrs 10 aufgeschrumpft werden. Bei dieser Erwärmung kehrt das Material der Segmentschrumpfmuffe 12 aufgrund des Memoryeffekts (Formgedächtnis) in eine frühere Form zurück, wobei es sich zusammenzieht (schrumpft). Dieser endgültige Zustand des Rohrformteils nach Aufschrumpfen der Segmentschrumpfmuffe 12 ist in Figur 7 dargestellt.

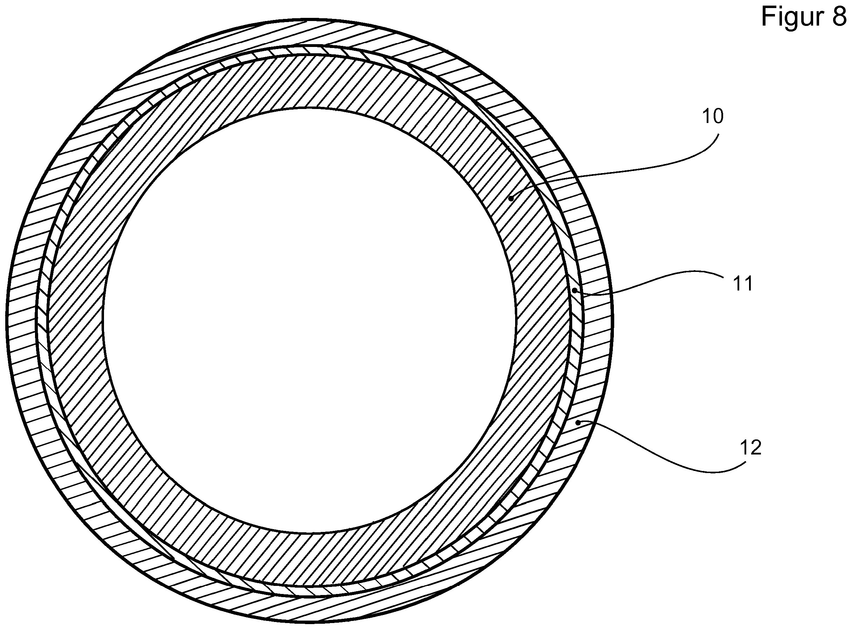

Figur 8 zeigt einen Querschnitt durch die fertige Segmentschrumpfmuffe 12 von Figur 7. Man erkennt hier das Kernrohr 10, welches die Innenschicht des Rohrformteils bildet, die auf das Kernrohr 10 aufgebrachte Zwischenschicht 11, sowie die aufgeschrumpfte Segmentschrumpfmuffe 12, die nur Kernrohr 10 und Zwischenschicht dicht umschließt.

### Bezugszeichenliste

- 10: Kernrohr
- 11: Zwischenschicht
- 12: Segmentschrumpfmuffe
- 12 a: Segmentelement, geradlinig
- 12 b: Segmentelement, trapezförmig
- 12 c: Segmentelement, trapezförmig
- 12 d: Segmentelement, geradlinig

- 19: Heißluftgebläse

## Patentansprüche

1. Verfahren zur Nachumhüllung von Rohrformteilen, bei dem man das Rohrformteil mittels einer Schrumpfmuffe umhüllt, die bei Anwendung von Wärme schrumpft, **dadurch gekennzeichnet, dass** man ein unter Druck und Wärme geweitetes Kunststoffrohrmaterial zunächst in axiale Segmentelemente (12 a, 12 b, 12 c, 12 d) aufschneidet, die Segmentelemente auf ein Kernrohr des Rohrformteils aufschiebt, diese Segmentelemente in dem herzustellenden Rohrformteil entsprechenden Winkeln zu einer Segmentschrumpfmuffe (12) wieder zusammenfügt, wobei man die Segmentelemente mittels eines Lochheizspiegels stumpf miteinander zu einer Segmentschrumpfmuffe verschweißt und dann die Segmentschrumpfmuffe unter Einbringung von Wärme schrumpft.

2. Verfahren zur Nachumhüllung von Rohrformteilen nach Anspruch 1, **dadurch gekennzeichnet, dass** die Segmentschrumpfmuffe (12) mittels einer Gasflamme oder mittels Heißluft erwärmt und geschrumpft wird.

3. Verfahren zur Nachumhüllung von Rohrformteilen nach Anspruch 1 oder 2, **dadurch gekennzeichnet, dass** die Segmentelemente (12 a, 12 b, 12 c, 12 d) durch Stumpfschweißen in den für das herzustellende Formteil entsprechenden Winkeln zueinander miteinander verbunden werden.

4. Verfahren zur Nachumhüllung von Rohrformteilen nach einem der Ansprüche 1 bis 3, **dadurch gekennzeichnet, dass** die Segmentelemente (12 a, 12 b, 12 c, 12 d), bevor sie zu der Segmentschrumpfmuffe (12) miteinander verbunden werden in ihrer vorgesehenen Winkelposition zueinander mechanisch fixiert werden.

5. Verfahren zur Nachumhüllung von Rohrformteilen nach einem der Ansprüche 1 bis 4, **dadurch gekennzeichnet, dass** die Segmentelemente (12 a, 12 b, 12 c, 12 d) für die Herstellung der Segmentschrumpfmuffe (12) aus einem vergleichsweise dünnwandigen Polyolefinmaterial, insbesondere aus einem Polyethylenmaterial bestehen.

6. Verfahren zur Nachumhüllung von Rohrformteilen nach einem der Ansprüche 1 bis 5, **dadurch gekennzeichnet, dass** das Rohrformteil ein Rohrbogen ist, insbesondere ein Rohrbogen mit einem Winkel im Bereich von etwa 45 ° bis etwa 90 °.

7. Verfahren zur Nachumhüllung von Rohrformteilen nach einem der Ansprüche 1 bis 6, **dadurch gekennzeichnet, dass** das Rohrformteil ein mindestens einschichtiges Kernrohr (10) umfasst, welches zunächst mit einer vorzugsweise dünnen folienartigen metallischen Zwischenschicht (11) umhüllt, vorzugsweise umwickelt wird und anschließend mittels einer Segmentschrumpfmuffe (12) nachumhüllt wird.

## Claims

1. A method for additional cladding of pipe form parts, in which the pipe form part is cladded by means of a shrink-on sleeve that shrinks when heat is applied, **characterized in that** a plastic pipe material, which is widened under pressure and heat, is initially cut up into axial segmental elements (12a, 12b, 12c, 12d), the segmental elements are pushed on a core pipe of the pipe form part and these segmental elements are reassembled into a segmental shrink-on sleeve (12) at angles corresponding to the pipe form part to be produced, wherein the segmental elements are butt-welded to one another so as to form a segmental shrink-on sleeve by means of an apertured heat reflector and the segmental shrink-on sleeve is then shrunk under the input of heat.

2. The method for additional cladding of pipe form parts according to claim 1, **characterized in that** the segmental shrink-on sleeve (12) is heated and shrunk by means of a gas flame or by means of hot air.

3. The method for additional cladding of pipe form parts according to claim 1 or 2, **characterized in that** the segmental elements (12a, 12b, 12c, 12d) are connected to one another at the angles corresponding to the form part to be produced by means of butt-welding.

4. The method for additional cladding of pipe form parts according to one of claims 1 to 3, **characterized in that** the segmental elements (12a, 12b, 12c, 12d) are mechanically fixed in their intended angular positions relative to one another before they are connected to one another so as to form the segmental shrink-on sleeve (12).

5. The method for additional cladding of pipe form parts according to one of claims 1 to 4, **characterized in that** the segmental elements (12a, 12b, 12c, 12d) for the production of the segmental shrink-on sleeve (12) consist of a comparatively thin-walled polyolefin material, particularly a polyethylene material.

6. The method for additional cladding of pipe form parts according to one of claims 1 to 5, **characterized in that** the pipe form part is a pipe elbow, particularly a pipe elbow with an angle in the range between approximately 45° and approximately 90°.

7. The method for additional cladding of pipe form parts according to one of claims 1 to 6, **characterized in that** the pipe form part comprises an at least single-layer core pipe (10), which is initially cladded, preferably wrapped, with a preferably thin, foil-like metallic intermediate layer (11) and then additionally cladded by means of a segmental shrink-on sleeve (12).

## Revendications

1. Procédé, destiné au post-enrobage de pièces moulées tubulaires, lors duquel l'on enrobe la pièce moulée tubulaire au moyen d'un manchon thermorétractable qui se rétracte par application de chaleur, **caractérisé en ce que** l'on ouvre par découpe une matière plastique tubulaire élargie sous pression et chaleur d'abord en des éléments segmentés (12 a, 12 b, 12 c, 12 d) axiaux, l'on pousse les éléments segmentés sur un tube d'âme de la pièce tubulaire moulée, l'on réassemble lesdits éléments segmentés sous des angles correspondant à la pièce moulée tubulaire qui doit être créée en un manchon thermorétractable segmenté (12), les éléments segmentés étant soudés bout à bout les uns aux autres au moyen d'un miroir chauffant perforé en un manchon thermorétractable segmenté, puis le manchon thermorétractable segmenté étant rétracté sous apport de chaleur.

2. Procédé destiné au post-enrobage de pièces moulées tubulaires selon la revendication 1, **caractérisé en ce que** l'on fait chauffer le manchon thermorétractable segmenté (12) au moyen d'un bec de gaz ou au moyen d'air chaud et on le fait se rétracter.

3. Procédé destiné au post-enrobage de pièces moulées tubulaires selon la revendication 1 ou 2, **caractérisé en ce que** l'on assemble les uns aux autres les éléments segmentés (12 a, 12 b, 12 c, 12 d) par soudage bout à bout sous les angles mutuels correspondant à la pièce moulée qui doit être créée.

4. Procédé destiné au post-enrobage de pièces moulées tubulaires selon l'une quelconque des revendications 1 à 3, **caractérisé en ce qu'**avant de les assembler les uns aux autres pour former le manchon thermorétractable segmenté (12), l'on fixe mécaniquement dans leur position angulaire mutuelle prévue les éléments segmentés (12 a, 12 b, 12 c, 12 d) .

5. Procédé destiné au post-enrobage de pièces moulées tubulaires selon l'une quelconque des revendications 1 à 4, **caractérisé en ce que** les éléments segmentés (12 a, 12 b, 12 c, 12 d) destinés à créer le manchon thermorétractable segmenté (12) sont constitués d'une matière polyoléfine à parois comparativement minces, notamment en une matière polyéthylène.

6. Procédé destiné au post-enrobage de pièces moulées tubulaires selon l'une quelconque des revendications 1 à 5, **caractérisé en ce que** la pièce moulée tubulaire est un tube coudé, notamment un coude présentant un angle de l'ordre d'environ 45 ° à environ 90 °.

7. Procédé destiné au post-enrobage de pièces moulées tubulaires selon l'une quelconque des revendications 1 à 6, **caractérisé en ce que** la pièce moulée tubulaire comprend un tube d'âme (10) au moins monocouche, que l'on enrobe d'abord, de préférence que l'on enroule dans une couche intermédiaire (11) métallique de type film, de préférence mince, et que l'on post-enrobe ensuite au moyen d'un manchon thermorétractable segmenté (12).
